# EUROPEAN PATENT APPLICATION

(11) **EP 4 613 817 A1**
(43) Date of publication of application: **10.09.2025**
(21) Application number: 25156800.2
(22) Date of filing: 10.02.2025
(51) Int. Cl.: C09D 1/00, C04B 41/00, C04B 41/50, C09D 5/00, C09D 7/61, C09D 5/08

(54) **ANTIOXIDANT COATINGS FOR CARBON COMPONENTS**

(30) Priority: 04.03.2024 US 202418594943
(71) Applicant: Honeywell International Inc., Charlotte, NC 28202 (US)
(72) Inventor: MITCHELL WARDEN, Hillary, Charlotte 28202 (US)
(74) Representative: Haseltine Lake Kempner LLP

(57) **Abstract**

An antioxidant coating composition may include an inorganic acid, and a hydrophobic agent including lanthanum phosphate. An article may include a substrate including carbon, and an antioxidant coating applied to at least a portion of the substrate. The antioxidant coating may include the inorganic acid, and the hydrophobic agent. A technique may include applying the antioxidant coating composition to at least the portion of the substrate, and allowing the antioxidant coating composition to dry or cure to form the antioxidant coating.

## Description

### TECHNICAL FIELD

The present disclosure relates to antioxidant coatings for carbon components, for example, brake discs including carbon composite materials.

### BACKGROUND

Carbon components may be used in high-temperature applications. For example, brakes may include carbon composites. Wheel assemblies including brakes in transportation may be exposed to oxidizing conditions. For example, airplane brakes may be exposed to elevated levels of catalytic oxidation. Such oxidation may affect brake performance, and may require relatively early removal and replacement of brakes. Premature removal and replacement of brakes tends to increase unplanned airplane downtime.

### SUMMARY

In general, the disclosure describes antioxidant coating compositions, carbon components coated with antioxidant compositions, and techniques for forming antioxidant coatings on carbon components. The components may include brakes, for example, brakes including carbon composites. In some examples, an antioxidant coating includes an inorganic acid (e.g., phosphoric acid and lanthanum phosphate. Lanthanum phosphate may protect against oxidation of a substrate including carbon (e.g., a brake disc), while being compatible with the substrate, with another coating on the substrate (e.g., a barrier coating), and/or with other components of the antioxidant coating. For example, a hydrophobic agent including lanthanum phosphate may repel oxidizing materials (e.g., aqueous de-icers) that may contact brakes or wheel assemblies. Thus, antioxidant coatings according to the present disclosure may reduce or prevent oxidation of the substrate by reducing or preventing contact or residence of oxidizing materials on brake substrates. In some examples, techniques for applying antioxidant compositions according to the present disclosure to a substrate may be relatively simple (e.g., brushing, coating, or spraying) compared to other techniques such as chemical vapor deposition or physical vapor deposition.

In some examples, an article includes a substrate including carbon, and an antioxidant coating applied to at least a portion of the substrate. The antioxidant coating may include an inorganic acid, and a hydrophobic agent including lanthanum phosphate.

In some examples, an example antioxidant coating composition includes an inorganic acid, and a hydrophobic agent including lanthanum phosphate.

In some examples, an example method includes applying an antioxidant coating composition to at least a portion of a substrate including carbon. The method may further include allowing the antioxidant coating composition to dry or cure to form an antioxidant coating on at least the portion of the substrate. The antioxidant coating composition may include an inorganic acid, and a hydrophobic agent including lanthanum phosphate.

The details of one or more examples are set forth in the accompanying drawings and the description below. Other features, objects, and advantages will be apparent from the description and drawings, and from the claims.

### BRIEF DESCRIPTION OF THE FIGURES

The details of one or more examples are set forth in the accompanying drawings and the description below. Other features, objects, and advantages will be apparent from the description and drawings, and from the claims.
FIG. 1A is perspective view of an article including a substrate and an antioxidant coating applied to the substrate.
FIG. 1B is a partial cross-sectional view of the article of FIG. 1A.
FIG. 2 is partial cross-sectional view of an article including a substrate, a barrier coating, and an antioxidant coating applied over the barrier coating.
FIG. 3 is a perspective view illustrating an example wheel.
FIG. 4 is a schematic cross-sectional view of an example wheel and brake assembly including the wheel of FIG. 3.
FIG. 5 is a flow diagram illustrating an example technique for forming an antioxidant coating on a substrate including carbon.

### DETAILED DESCRIPTION

In general, the disclosure describes antioxidant coatings for a substrate including carbon, for example, a brake disc. The coatings may provide antioxidant protection to the substrate, promoting the life of the substrate and reducing the oxidative wear and need for replacement of the substrate.

The substrate may be a brake disc, for example, a disc including a carbon composite, and such a substrate may be susceptible to a relatively high levels of catalytic oxidation. For example, brakes or wheel assemblies in which brakes are installed may be exposed to de-icers or other liquids or materials that may tend to oxidize the substrate of the brake. Such oxidation may tend to affect the integrity of the brake, for example, resulting in premature wear or performance degradation, needing relatively more frequent replacement. An antioxidant coating may be used to protect the substrate from oxidation. Certain antioxidant coatings may include a combination of a phosphate glass-based coating and a ceramic or metal-based barrier coating. While phosphate glasses may protect carbon against thermal oxidation, such glasses may not effectively protect carbon from the impact of catalytic de-icers. Barrier coatings including ceramics and/or metals may be more effective at protecting carbon brakes against catalytic oxidation. However, the performance of such coatings reduces in course of thermal cycling of the substrate, and may tend to crack. Catalysts may permeate the barrier coating through cracks, significantly reducing the antioxidant protection.

In some examples, antioxidants coatings according to the present disclosure include at least one hydrophobic agent (e.g., lanthanum phosphate). Hydrophobicity may protect the substrate from catalytic oxidation. For example, an antioxidant coating including a hydrophobic agent may actively repel aqueous de-icers or other oxidative liquids (e.g., because of surface tension) that may be directed onto the substrate (e.g., in a wheel assembly, brake, aircraft, or runway). In this way, the coating may reduce the amount of catalyst that the substrate comes into contact with and increase the efficacy of underlying barrier coats that may be present.

Further, using lanthanum phosphate as a hydrophobic agent may promote compatibility of the antioxidant coating with the underlying substrate, with another coating on the substrate (e.g., a barrier coating), or with another component of the antioxidant coating. Antioxidant coatings according to the present disclosure may also be relatively simpler to apply to a substrate compared to other coatings, and may exhibit better surface penetration and/or retention. Additionally, antioxidant coatings according to the present disclosure may exhibit a relatively lower susceptibility to cracking or thermal cycling, for example, by bonding or penetrating the substrate. Thus, brakes with antioxidant coatings according to the present disclosure may have a relatively better performance and longer operational life, compared to brakes without such coatings.

While antioxidant coatings may be applied to aircraft brakes, antioxidant coatings according to the present disclosure may be applied to brakes of other types of vehicles. Moreover, while substrates of brakes have been described, antioxidant coatings according to the present disclosure may be applied to any substrate (e.g., including carbon or carbon composite) that may be susceptible to oxidative conditions, and that may benefit from a hydrophobic resistance to oxidation.

In some examples, an example antioxidant coating composition includes an inorganic acid, and a hydrophobic agent including lanthanum phosphate. The composition may include a colloidal suspension of the hydrophobic agent in water. In some examples, the inorganic acid may include phosphoric acid. For example, phosphoric acid and lanthanum phosphate may exhibit mutual compatibility, and promote retention of lanthanum phosphate. The composition may include an additional phosphate, for example, mono-aluminum phosphate, manganese phosphate, zinc phosphate, and/or potassium phosphate. The composition may further include a surfactant, for example, to promote stability of a colloidal suspension and resist separation of the suspension.

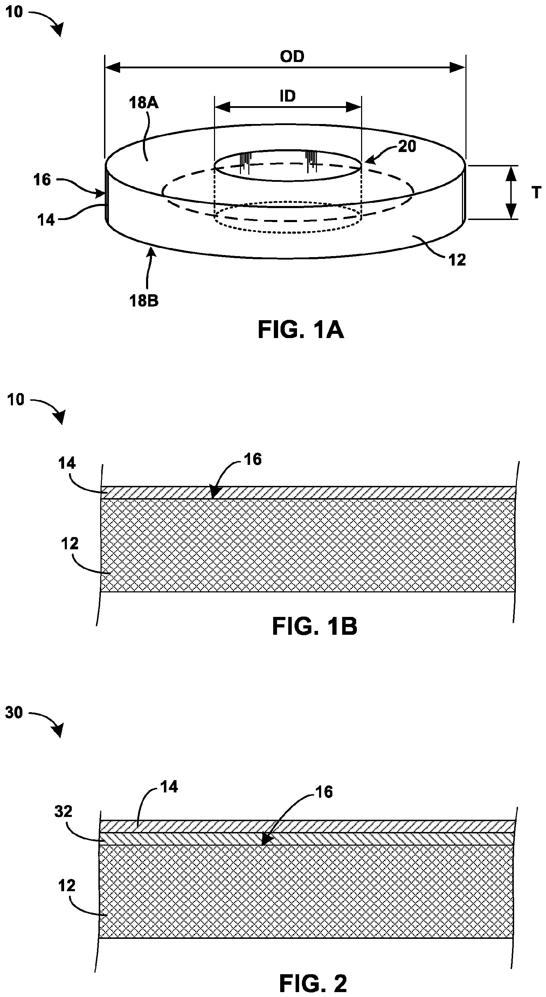

FIG. 1A is perspective view of an article 10 including a substrate 12 and an antioxidant coating 14 applied to the substrate. FIG. 1B is a partial cross-sectional view of article 10 of FIG. 1A. Substrate 12 may include a component susceptible to oxidation, and shielded from oxidation by antioxidant coating 14. For example, the component may include carbon. Thus, substrate 12 may include carbon in any form, including a graphitic form, or a carbon composite. The carbon composite may include a carbon-carbon composite or a carbon-ceramic composite.

In some examples, article 10 includes a brake disc, such as a rotor or stator of a braking mechanism of a vehicle, for example, an aircraft. In other examples, article 10 may define a mechanical components that operate in oxidative environments at relatively high temperatures. For example, the temperatures may exceed about 2,500°F (1,371°C), such as temperatures that may exceed 3000°F (1,649°C). Article 10 may have any suitable shape.

Article 10 may include a friction surface (for example, a surface that configured to experience friction in use) and a non-friction surface (for example, a surface that is not configured to experience friction in use). In examples in which article 10 includes a brake disc, an outer circumferential surface 16 may defines a non-friction surface. Annular surfaces 18A and/or 18B may define friction surfaces of article 10. In the example of FIGS. 1A and 1B, article 10 includes antioxidant coating 14 on outer circumferential surface 16. However, in other examples, antioxidant coating 14 may be present on at least a portion of a friction surface. Further, antioxidant coating 14 may be present on a portion of or an entirety of a friction surface or a non-friction surface. In some examples, antioxidant coating 14 is only present on a non-friction surface, and absent from all friction surfaces.

Antioxidant coating 14 is applied to at least a portion of substrate 12. In some examples, antioxidant coating 14 is applied to an entire surface of substrate 12. In other examples, antioxidant coating 14 is applied to less than the entire surface of substrate 12.

Substrate 12 may include carbon-based reinforcement fibers and a carbon-based matrix material at least partially surrounding the carbon-based reinforcement fibers. In some examples, substrate 12 may be formed from a porous preform that includes carbon fibers or carbon-precursor fibers. Examples of porous preforms that may be used to produce substrate 12 include, but are not limited to: a fibrous preform, such as a woven fiber preform, a nonwoven fiber preform, a chopped-fiber and binder preform, a binder-treated random fiber preform, a carbon fiber preform, or a ceramic fiber preform; a foam preform; a porous carbon body preform; or a porous ceramic body preforms. In some examples, the porous preform includes a plurality of mechanically bound layers, which can be, for example, a plurality of fibrous layers, such as a plurality of woven or nonwoven fabric layers, connected together, e.g., bound by a binder, such as a resin binder, or via needle-punching of the plurality of layers. In some examples, the layers include one or more tow layers, one or more web layers, or combinations thereof. Tow layers may include one or more tows of fibers. Tows of fibers may be arranged in any suitable arrangement including, for example, linear, radial, chordal, or the like. Web layers may include web fibers, which may include relatively short, chopped, and entangled fibers of fibers.

In other examples, the porous preform may not include predefined layers, but, rather, may be formed from a bundle of fibers that are mechanically bound together, e.g., via needling. In other examples, a combination of any of the aforementioned types of porous preforms can be used.

In some examples, the porous preform may be formed using carbon fibers. In other examples, the porous preform may be formed using a carbon fiber precursor material, such as polyacrylonitrile (PAN) fibers, which are subsequently pyrolyzed to form carbon fibers. In some examples, the porous preform may include isotropic carbon or a precursor material that converts to isotropic carbon when pyrolyzed. For example, PAN may convert to isotropic carbon when pyrolyzed.

Substrate 12 also may include a matrix material that at least partially encapsulates the carbon fibers. The matrix material may be introduced into the porous preform using one or more of a variety of techniques, including, for example, chemical vapor deposition/chemical vapor infiltration (CVD/CVI), resin transfer molding (RTM), vacuum/pressure infiltration (VPI), high pressure impregnation/carbonization (PIC), or the like. Examples of densifying agents that may be used in an RTM, VPI, or PIC process include, but are not limited to, liquid resin or pitches (e.g., isotropic and/or mesophase pitches) that provide a relatively high carbon yield, e.g., of greater than about 80%, and may have a relatively high viscosity, such as synthetic mesophase pitches, coal-tar derived pitches, such as thermally or chemically treated coal tar, petroleum-derived pitches, synthetic-pitch derivatives, thermally treated pitches, catalytically converted pitches, and thermoset or thermoplastic resins, such as phenolic resins. In some examples, the carbon-carbon composite preform may be subjected to a sufficient number of densification steps to result in a density between about 1.5 grams per cubic centimeter (g/cm³) and about 1.85 g/cm³ or higher.

In some examples of RTM, the carbon-carbon composite preform is placed into a mold matching the desired part geometry. A relatively low viscosity thermoset resin may be injected at low temperature (50 °C to 150 °C) using pressure or induced under vacuum, into the porous carbon-carbon composite preform contained within a mold. The resin is cured within the mold before being removed from the mold.

In one example of an RTM process, the densifying agent, such as a resin or pitch, may be rapidly injected into a mold enclosing the porous preform, e.g., within between about 10 seconds and about 40 seconds, such as about between about 15 seconds and about 40 seconds, using an injection apparatus. In one example, the injection apparatus may comprise a heater extruder that melts a densifying agent feedstock, such as resin pellets, and feeds the liquid densifying agent to an accumulator. An injector, such as a piston, may drive the liquid densifying agent into the mold at a relatively high pressure and at a relatively high velocity. Further description of an example injection apparatus and method of using the apparatus is described in the commonly-assigned U.S. Patent Nos. 6,537,470 and 7,172,408, the entire contents of which are incorporated herein by reference.

In some examples of VPI, the carbon-carbon composite preform is heated under inert conditions to well above the melting point of the impregnating pitch. Then, gas in the pores of the carbon-carbon composite preform is removed by evacuating the preform. Finally, molten pitch is allowed to infiltrate the pores of the preform, as the overall pressure is returned to one atmosphere or above. In the VPI process, a volume of resin or pitch is melted in one vessel while the porous carbon-carbon composite preform is contained in a second vessel under vacuum. The molten resin or pitch is transferred from vessel one into the porous preforms contained in the second vessel using a combination of vacuum and pressure. The VPI process typically employs resin and pitches which possess low to medium viscosity. Such pitches may provide lower carbon yields than mesophase pitches.

After injecting the densifying agent into the porous preform, the densifying agent may be pyrolyzed to remove any non-carbon containing elements, which may convert the densifying agent infiltrated within the porous preform into a carbon-carbon composite. In one example, where a synthetic mesophase pitch is used, the pitch may be pyrolyzed using hot isostatic pressurization (HIP). In another example, the densifying agent may be stabilized by heating the densifying agent infiltrated in the porous preform in an oxygen-containing environment to a temperature below the softening point of the densifying agent. The oxygen may react with the densifying agent to provide for cross-linking within the densifying agent. Once a suitable amount of oxygen has been absorbed and/or reacted into the densifying pitch, the porous preform may be heated to pyrolysis temperatures without melting the densifying agent or exuding any of the densifying agent from the porous preform.

When the densifying agent is pyrolyzed, the densifying agent may form anisotropic carbon. Although the densifying agent may be a solvent-to-high yielding carbon precursor, the resulting anisotropic carbon may still have some porosity. In some examples, the porosity may depend on the type of densifying agent, e.g., the type of carbon or resin. In some examples, at least some of the pores of the anisotropic carbon are open, e.g., in which at least some of the adjacent pores are connected.

In some examples, additional densification steps may be performed after any RTM, VPI, or PIC densification steps to achieve a final density for article 10. For example, a liquid densifying agent with a relatively low viscosity, such as a furfuryl alcohol may be infiltrated into pores remaining in the densified preform to at least partially fill the remaining pores. As another example, one or more cycles of CVD/CVI may be performed to at least partially fill the remaining pores in the densified preform.

In some examples, as shown in FIG. 1A, article 10 may have a generally disc-shaped geometry, e.g., for use as a brake disc. Substrate 12 may include a central bore 20 extending through an axial thickness T of carbon-carbon composite substrate 12. In some examples, carbon-carbon composite substrate 12 has an inner diameter ID at bore 20, an outer diameter OD at an outer circumferential surface 16, and an axial thickness T, which is a distance between annular surfaces 18A and 18B measured in a direction substantially orthogonal to the direction in which inner diameter ID and outer diameter OD are measured. In other examples, article 10 may define a different geometry.

Antioxidant coating 14 protects at least a portion of substrate 10 from oxidation. Antioxidant coating 14 includes an inorganic acid, and a hydrophobic agent including lanthanum phosphate. The inorganic acid may facilitate introduction or retention of lanthanum phosphate in antioxidant coating 14, or in an antioxidant coating composition used to form antioxidant coating 14. For example, the inorganic acid may include at least one of hydrochloric acid, sulfuric acid, nitric acid, or phosphoric acid. In some examples, the inorganic acid includes, consists of, or consists essentially of (e.g., except for impurities or contaminants) phosphoric acid. Including phosphoric acid may promote compatibility with lanthanum phosphate, for example, because of similar phosphate chemistry. In some examples, antioxidant coating 14 further includes at least one additional phosphate compound, for example, at least one of mono-aluminum phosphate, manganese phosphate, zinc phosphate, or potassium phosphate. One or more of the additional phosphate compound may facilitate forming antioxidant coating 14, for example, by promoting compatibility with other components of antioxidant coating 14 or another component of substrate 12. In some examples, the additional phosphate compound is present as a residual component of the antioxidant coating composition used to form antioxidant coating 14.

Antioxidant coating 14 may include further components. For example, antioxidant coating 14 may further include a surfactant. In some examples, the surfactant includes at least one of phenol-derived ethoxylates, branched secondary alcohol ethoxylates, ethoxylated alcohols, or ethylene oxide/propylene oxide block copolymers. The surfactant may promote homogeneity and stability of antioxidant coating 14. In some examples, an antioxidant coating composition used to form antioxidant coating 14 includes a suspension, for example, a colloidal suspension, and the surfactant may promote stability and resist separation of the colloidal suspension. In some examples, antioxidant coating 14 includes the surfactant as a residual component of the antioxidant coating composition.

In some examples, antioxidant coating 14 includes, consists of, or consists essentially of (e.g., except for impurities or contaminants) a glass. The glass may include at least one component forming a continuous matrix. Further, the glass may include at least one component that may be dispersed in the glass, for example, as a discrete or discontinuous phase, or otherwise embedded in the glass, but not forming the glass itself. In some examples, antioxidant coating further includes at least one of boric acid or boric anhydride. For example, the glass may include a borate glass. Providing a glass in antioxidant coating 14 may promote water-resistance and hydrophobicity of antioxidant coating 14.

In some examples, antioxidant coating 14 penetrates at least partially into a depth from a surface of substrate 12, for example, at least 10 microns, or at least 100 microns, or at least 1000 microns. In some examples, a portion of substrate 12 may be impregnated with antioxidant coating 14 at least partially within an interior of substrate 12.

Antioxidant coating 14 may have any suitable thickness. In some examples, antioxidant coating 14 may have a thickness that is at least 10 microns, or at least 100 microns, or at least 1000 microns. In some examples, a thickness of antioxidant coating 14 may be less than or equal to 1000 microns, or less than or equal to 100 microns, such as within a range from about 10 microns to about 100 microns. In some examples, a thickness of antioxidant coating 14 is greater than 100 microns, such as within a range from about 100 microns to about 500 microns.

While antioxidant coating 14 may be the only coating on substrate 12, in other examples, substrate 12 may include further coatings.

FIG. 2 is partial cross-sectional view of an article 30 including substrate 12, a barrier coating 32, and antioxidant coating 14 applied over barrier coating 32. Substrate 12 and antioxidant coating 14 of article 30 may be substantially the same as described with reference to FIGS. 1A and 1B. However, barrier coating 32 may be further present, and shield substrate 12 from environmental conditions. For example, barrier coating 32 may including a thermal barrier coating or an environmental barrier coating. While barrier coating 32 may be disposed between antioxidant coating 14 and substrate 12 as shown in FIG. 2, in other examples, antioxidant coating 14 may be disposed between substrate 12 and barrier coating 32. Further, more than one barrier coating or antioxidant coating may be present, for example, as alternating layers.

In some examples, barrier coating 32 is disposed directly on a surface of substrate 12, for example, on outer circumferential surface 16. In some examples, barrier coating 32 is coextensive with antioxidant coating 14. In other examples, barrier coating 32 may cover a smaller or larger area or surface than antioxidant coating 14. In some examples, barrier coating 32 is initially deposited on substrate 12 and is configured to selectively receive antioxidant coating 14, such that antioxidant coating is formed only at regions on substrate 12 where barrier coating 32 is present. Barrier coating 32 may include, for example, a silicon-based coating, such as a silicon carbide coating, another carbide-based coating, such as titanium carbide or boron carbide; a metal or an alloy, for example, including Ti, W, or Mo; or any other suitable barrier coating or combinations thereof. In some examples, barrier coating 32 is configured to improve adhesion of antioxidant coating 14 to substrate 12 compared to the adhesion of antioxidant coating 14 to substrate 12 absent barrier coating 32.

Barrier coating 32 may have any suitable thickness. In some examples, barrier coating 32 may have a thickness within a range from about 10 microns to about 1000 microns, or from about 10 microns to about 100 microns. In some examples, a thickness of barrier coating 32 is less than 10 microns. In some examples, a thickness of barrier coating 32 is greater than 100 microns, such as within a range from about 100 microns to about 500 microns.

In examples in which barrier coating 32 includes a silicon carbide coating, barrier coating 32 maybe formed by in-situ reaction between silicon and carbon of substrate 12. For example, silicon may be sprayed onto a surface of substrate 12 and heat treated in vacuum at about 2,642°F (1450°C) as described in commonly-assigned U.S. Patent No. 6,555,173 to Forsythe et al., which is incorporated herein by reference in its entirety.

In some examples, an antioxidant coating composition includes an inorganic acid, and a hydrophobic agent including lanthanum phosphate. The lanthanum phosphate may be present in any suitable concentration in the composition to provide sufficient hydrophobicity to resist oxidation, for example, at least 0.1%, at least 0.5%, at least 1%, at least 2%, at least 3%, or at least 5%, by volume. The lanthanum phosphate may be present in a concentration of less than 6%, less than 5%, less than 2%, less than 1%, or less than 0.5%, by volume. In some examples, the lanthanum phosphate is present in a range of from 0.5% to 5%, from 0.5% to 2%, from 1% to 3%, from 0.5% to 3%, or from 1% to 5%, by volume.

The antioxidant coating composition may be applied to substrate 12 (or another substrate including carbon), and configured to form an antioxidant coating that may shield substrate 12 from oxidation. For example, the antioxidant coating composition may be dried, heated, or cured to form antioxidant coating 14.

The inorganic acid may include phosphoric acid. The inorganic acid may be present in any suitable concentration in the composition, for example, at least 5%, at least 10%, at least 20%, or at least 30%, by volume. The inorganic acid may be present in a concentration of less than 60%, less than 50%, less than 40%, less than 30%, or less than 20%, by volume. In some examples, the inorganic acid is present in a range of from 5% to 50%, from 10% to 50%, from 30% to 50%, from 5% to 30%, or from 10% to 30%, by volume.

The composition may further include a surfactant. The surfactant may be present in any suitable concentration in the composition, for example, at least 0.1%, at least 0.3%, at least 0.5%, or at least 1%, by volume. The surfactant may be present in a concentration of less than 5%, less than 3%, less than 2%, or less than 1%, by volume. In some examples, the surfactant is present in a range of from 0.5% to 2%, from 0.5% to 1%, or from 1% to 2%, by volume.

The composition may further include at least one additional phosphate compound, for example, at least one of mono-aluminum phosphate, manganese phosphate, zinc phosphate, or potassium phosphate. The at least one additional phosphate compound may be present in any suitable concentration, for example, at least 0.1%, at least 0.5%, at least 1%, at least 2%, at least 3%, or at least 5%, by volume. The at least one additional phosphate compound may be present in a concentration of less than 6%, less than 5%, less than 2%, less than 1%, or less than 0.5%, by volume. In some examples, the at least one additional phosphate compound is present in a range of from 0.5% to 5%, from 0.5% to 2%, from 1% to 3%, from 0.5% to 3%, or from 1% to 5%, by volume.

The composition may further include boric acid or boric anhydride. The boric acid or boric anhydride may be present in any suitable concentration, for example, at least 0.1%, at least 0.5%, at least 1%, at least 2%, at least 3%, or at least 5%, by volume. The boric acid or boric anhydride may be present in a concentration of less than 6%, less than 5%, less than 2%, less than 1%, or less than 0.5%, by volume. In some examples, the boric acid or boric anhydride is present in a range of from 0.5% to 5%, from 0.5% to 2%, from 1% to 3%, from 0.5% to 3%, or from 1% to 5%, by volume.

The composition may include a colloidal suspension in an aqueous carrier. For example, one or more of lanthanum phosphate or other components may be at least partially undissolved or suspended, while other components may be partially dissolved in water, in the antioxidant coating composition.

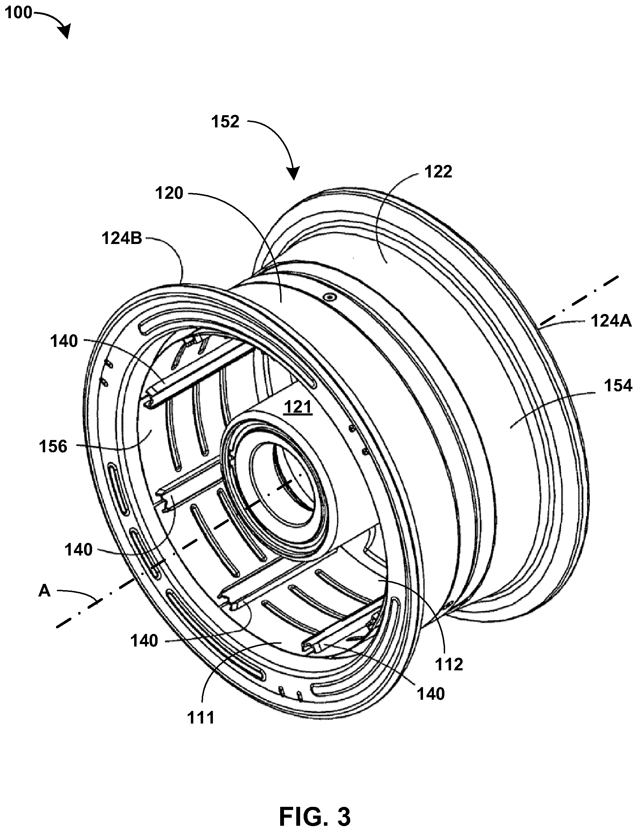

FIG. 3 is a perspective view of an example wheel 100 defining an interior surface 156. In some examples, wheel 100 is a part of an aircraft vehicle. In other examples, wheel 100 may be a part of any other vehicle, such as, for example, any marine vessel, land vehicle, or other vehicle. Wheel 100 may include a rim 152 defining an exterior surface 154 and interior surface 156. Rim 152 may include tubewell 120, wheel hub 121, and outboard tubewell 122. In some examples, interior surface 156 may include an inner diameter of tubewell 120. For example, in some cases, interior surface 156 may be referred to as an inner diameter surface of wheel 100.

In some examples, a tire (not shown) may be mounted on exterior surface 154 of rim 152. For example, wheel 100 may include an inboard bead seat 124B and an outboard bead seat 124A configured to retain a tire on exterior surface 154 of rim 152.

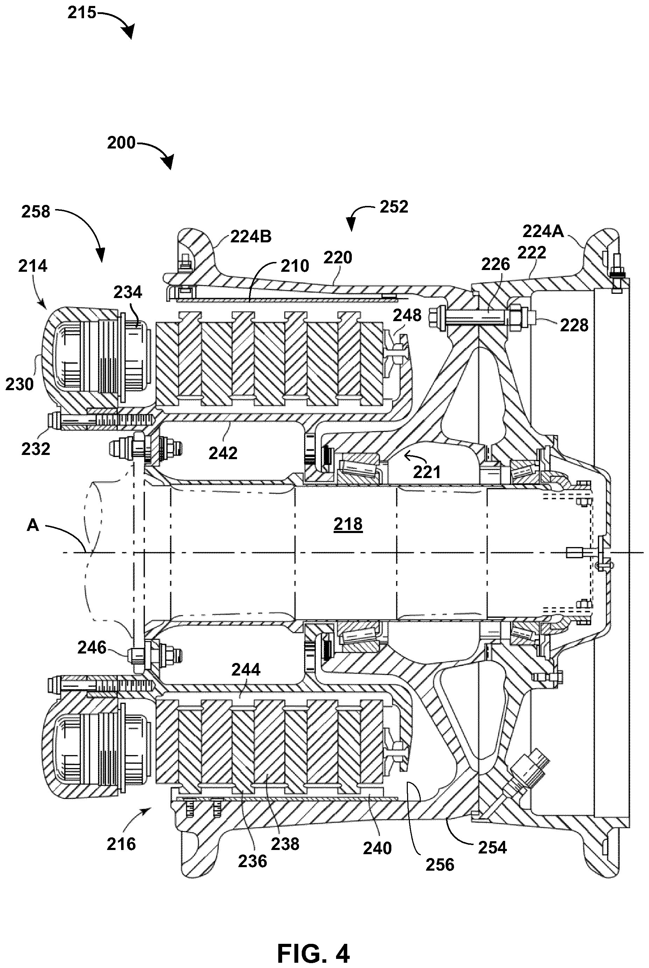

Wheel 100 is configured to engage with one or more rotors (not shown in FIG. 3) of a braking assembly. For example, as shown in the example of FIG. 3, a plurality of rotor drive keys 140 are attached to interior surface 156, and each rotor drive key of the plurality of rotor drive keys 140 may be configured to engage with one or more rotors of a brake disc stack of a braking assembly. The plurality of rotor drive keys 140 extending in the substantially axial direction A may enable wheel 100 to slide onto a braking assembly. An example braking assembly is described in more detail with respect to FIG. 4.

FIG. 4 is a schematic cross-sectional view of an example wheel and brake assembly 215 including a wheel 200 and a braking assembly 258. Wheel and brake assembly 215 is shown and described to provide context to the example antioxidant coatings described in the present disclosure. The antioxidant coatings described in the present disclosure, however, may be used with any suitable wheel and brake assembly in other examples.

Wheel 200 includes tubewell 220, wheel hub 221, outboard tubewell 222, outboard bead seat 224A, and inboard bead seat 224B, rim 252, exterior surface 254, and interior surface 256, which may be configured individually and in relation to each other in the same manner as that discussed for the like-named components of wheel 100 (FIG. 3). Wheel 200 may be configured to be rotatably carried on axle 218. For example, wheel 200 may be rotatably carried on axle 218 by wheel hub 221. In turn, wheel 200 may impart motion to a vehicle including or mounted on the wheel and brake assembly 215. In the example shown in FIG. 4, tubewell 220 and outboard tubewell 222 are mechanically coupled by lug bolt 226 and lug nut 228. Other connection techniques may be used in other examples.

Braking assembly 258 includes an actuator assembly 214 and a brake stack 216. Actuator assembly 214 includes actuator housing 230, actuator housing bolt 232, and piston 234. Brake stack 216 includes a plurality of brake discs, which include interleaved rotor brake discs 236 and stator brake discs 238. Rotor brake discs 236 are configured to move relative to stator brake discs 238, e.g., rotationally about axis A and axially along axis A relative to stator brake discs 238. Rotor brake discs 236 engage with wheel 200, and in particular tubewell 220, by rotor drive keys 240. Stator brake discs 238 are mounted to torque tube 242 by splines 244. Wheel and brake assembly 215 may support any variety of private, commercial, or military aircraft or other type of vehicle.

Wheel and brake assembly 215 may be mounted to a vehicle via torque tube 242 and axle 218. In the example of FIG. 4, torque tube 242 is affixed to axle 218 by a plurality of bolts 246. Torque tube 242 supports actuator assembly 214 and stator brake discs 238. Axle 218 may be mounted on a strut of a landing gear (not shown) or other suitable component of the vehicle to connect wheel and braking assembly 215 to the vehicle.

During operation of the vehicle, braking may be necessary from time to time, such as during landing and taxiing procedures of an aircraft. Wheel and brake assembly 215 is configured to provide a braking function to the vehicle via actuator assembly 214 and brake stack 216. Actuator assembly 214 includes actuator housing 230 and piston 234. Actuator assembly 214 may include different types of actuators such as one or more of, e.g., an electrical-mechanical actuator, a hydraulic actuator, a pneumatic actuator, or the like. During operation, piston 234 may extend away from actuator housing 230 to axially compress brake stack 216 against compression region 248 for braking.

Rotor brake discs 236 are slidably engaged with rotor drive keys 240 for common rotation with tubewell 220 and rotor drive keys 240. Stator brake discs 238 are mounted to torque tube 242 by splines 244. In the example of FIG. 4, brake stack 216 includes four rotors and five stators. However, a different number of rotors and/or stators may be included in brake stack 216 in other examples. Rotor brake discs 236 and stator brake discs 238 may provide opposing friction surfaces for braking an aircraft. In some examples, wheel and brake assembly 215 may include a wheel heat shield 210 between rotor brake discs 236 and tubewell 220 in order to, for example, limit thermal transfer between brake stack 216 and wheel 200.

In some examples, splines 244 may be circumferentially spaced about an outer portion of torque tube 242. Stator brake discs 238 may include a plurality of radially inwardly disposed lug notches along an inner diameter of the brake disc configured to engage with splines 244. Similarly, rotor brake discs 236 may include a plurality of radially inwardly disposed drive slots along an outer periphery (e.g., an outer diameter in the case of a disc having a circular cross-section) of the rotor brake disc. The drive slots may be configured to engage with rotor drive keys 240. As such, rotor brake discs 236 may rotate with the motion of wheel 200 while stator brake discs 238 remain stationary, allowing the friction surfaces of an adjacent stator brake disc 238 and rotor brake disc 236 to engage with one another to decelerate the rotation of wheel 200.

At least a portion of at least one disc of rotor brake discs 236 or stator brake discs 238 may be coated with an antioxidant coating (e.g., the antioxidant coating described with reference to FIGS. 1A to 2). Thus, when wheel and brake assembly 215 is subjected to an oxidizing liquid, for example, in course of washing, deicing, or other operations, or some environmental liquid, the antioxidant coating may tend to resist contact between the liquid and at least one disc. For example, a hydrophobic agent in the antioxidant coating may resist the retention of or contact between the liquid and a portion of a surface of the at least one disc, thus reducing or preventing oxidation of the at least one disc.

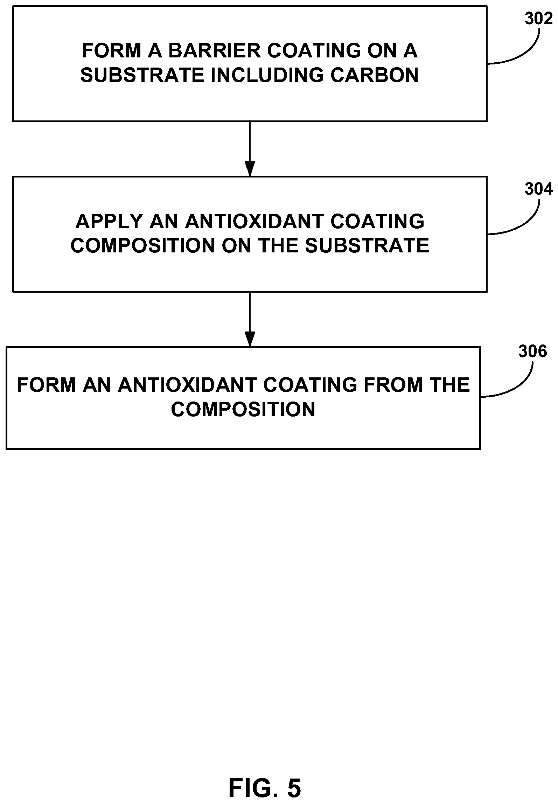

FIG. 5 is a flow diagram illustrating an example technique for forming an antioxidant coating on a substrate including carbon. The technique of FIG. 5 is described with respect to articles 10 and 30 discussed above in reference to FIGS. 1A to 2, however, the technique may be used to form other articles and other techniques may be used to form articles 10 or 30.

In some examples, the technique illustrated in FIG. 5 optionally may include forming substrate 12 including a carbon composite by preform densification processes as described above. After densifying substrate 12, the technique may include forming antioxidant coating 14 and/or barrier coating 32.

The technique illustrated in FIG. 5 may optionally include forming, on at least a portion of 12, barrier coating 32 (302). In examples in which barrier coating 32 includes silicon carbide, forming barrier coating 32 may include applying (e.g., painting, spraying, or the like) a silicon containing material to at least a portion of a surface of substrate 12. The silicon containing material may include, for example, silicon metal (Si); Si and silicon carbide (SiC); Si, SiC, and alumina; Si, SiC, and molybdenum disilicate (MoSi₂); Si and MoSi₂; Si and tantalum disilicate (TaSi₂); Si and titanium disilicate (TiSi₂); or Si and a combination of one or more disilicides described herein. Forming barrier coating 32 also may include heating the silicon containing material and substrate 12 in a vacuum to form silicon carbide by in-situ reaction between silicon of a silicon containing material and carbon of substrate 12. In some examples, heating the silicon containing material and substrate 12, may include heating the silicon containing material and substrate 12 in a vacuum to about 2,642 °F (1450 °C).

Similar techniques may be used to form other barrier or bond coatings, such as coatings including titanium carbide (TiC), boron carbide, or a metal or an alloy, for example, including Ti, W, or Mo. For example, a TiC bond coat may include titanium (Ti) metal plus SiC and disilicides can be used. However, their processing temperature is higher than 1450 °C, for example, near the melting point of titanium (1660 °C).

The technique of FIG. 5 may include applying an antioxidant coating composition to at least a portion of substrate 12 including carbon (304). The antioxidant coating composition includes an inorganic acid and a hydrophobic agent including lanthanum phosphate. The inorganic acid may include phosphoric acid. The inorganic acid may further include at least one surfactant; at least one additional phosphate compound including at least one of mono-aluminum phosphate, manganese phosphate, zinc phosphate, or potassium phosphate; or at least one of boric acid or boric anhydride.

The applying (304) may further include forming the antioxidant coating composition, for example, by mixing, suspending, or dissolving one or more components of antioxidant coating composition in a carrier, for example, in water. The applying (304) may further include at least one of spraying, coating (e.g., dip-coating or curtain coating), or brushing the antioxidant coating composition on at least the portion of substrate 12. In examples in which barrier coating 32 is applied to substrate 12, the applying (304) may include applying the antioxidant coating composition to at least a portion of barrier coating 32.

The technique illustrated in FIG. 5 further includes forming antioxidant coating 14 from the antioxidant coating composition (306), for example, by allowing the antioxidant coating composition to dry or cure to form antioxidant coating 14 on at least the portion of substrate 12. The forming (306) may include allowing a solvent (e.g., water) from antioxidant coating composition to evaporate in ambient conditions, or heating the antioxidant coating composition to evaporate substantially all of the solvent and form a dried or cured antioxidant coating 14. For example, substrate 12 and/or the antioxidant coating composition may be heated at at least 120 °C, at least 150 °, at least 170 °C, or at least 200 °C for a suitable duration.

After drying the antioxidant coating composition, the technique may include heating the dried antioxidant coating composite to remove residual solvent or component, or to promote bonding of antioxidant coating with substrate 12 or barrier coating 32. For example, heating the dried antioxidant coating composite may include heating substrate 12 and antioxidant coating 14 at at least 250 °C, at least 300 °C, at least 350 °C, or at least 400 °C for a suitable duration.

The following clauses illustrate example subject matter described herein.

Clause 1: An article including: a substrate including carbon; and an antioxidant coating applied to at least a portion of the substrate, where the antioxidant coating includes: an inorganic acid; and a hydrophobic agent including lanthanum phosphate.

Clause 2: The article of clause 1, where the inorganic acid includes phosphoric acid.

Clause 3: The article of clauses 1 or 2, where the antioxidant coating further includes a surfactant.

Clause 4: The article of any of clauses 1 to 3, where the antioxidant coating further includes at least one of mono-aluminum phosphate, manganese phosphate, zinc phosphate, or potassium phosphate.

Clause 5: The article of any of clauses 1 to 4, where the antioxidant coating further includes at least one of boric acid or boric anhydride.

Clause 6: The article of any of clauses 1 to 5, where the substrate includes a brake disc.

Clause 7: The article of any of clauses 1 to 6, where the antioxidant coating includes a glass.

Clause 8: The article of any of clauses 1 to 7, where the substrate includes a carbon composite.

Clause 9: The article of any of clauses 1 to 8, further comprising a barrier coating between the antioxidant coating and the substrate.

Clause 10: An antioxidant coating composition including: an inorganic acid; and a hydrophobic agent including lanthanum phosphate.

Clause 11: The antioxidant coating composition of clause 10, where the inorganic acid includes phosphoric acid.

Clause 12: The antioxidant coating composition of clauses 10 or 11, further including a surfactant.

Clause 13: The antioxidant coating composition of any of clauses 10 to 12, further including at least one of mono-aluminum phosphate, manganese phosphate, zinc phosphate, or potassium phosphate.

Clause 14: The antioxidant coating composition of any of clauses 10 to 13, further including at least one of boric acid or boric anhydride.

Clause 15: The antioxidant coating composition of any of clauses 10 to 14, including a colloidal suspension of the hydrophobic agent in an aqueous carrier.

Clause 16: A method including: applying an antioxidant coating composition to at least a portion of a substrate including carbon; and allowing the antioxidant coating composition to dry or cure to form an antioxidant coating on at least the portion of the substrate, where the antioxidant coating composition includes: an inorganic acid; and a hydrophobic agent including lanthanum phosphate.

Clause 17: The method of clause 16, where the inorganic acid includes phosphoric acid.

Clause 18: The method of clauses 16 or 17, where the antioxidant coating composition further includes at least one surfactant; at least one of mono-aluminum phosphate, manganese phosphate, zinc phosphate, or potassium phosphate; and at least one of boric acid or boric anhydride.

Clause 19: The method of any of clauses 16 to 18, where the applying includes at least one of spraying, brushing, or coating the antioxidant coating composition on at least the portion of the substrate.

Clause 20: The method of any of clauses 16 to 19, further including heating the substrate with the antioxidant coating composition to form the antioxidant coating.

Various examples have been described. These and other examples are within the scope of the following claims.

## Claims

1. An article comprising:
a substrate comprising carbon; and
an antioxidant coating applied to at least a portion of the substrate,
wherein the antioxidant coating comprises:
an inorganic acid; and
a hydrophobic agent comprising lanthanum phosphate.

2. The article of claim 1, wherein the inorganic acid comprises phosphoric acid.

3. The article of any one of claims 1 or 2, wherein the antioxidant coating further comprises a surfactant.

4. The article of any one of claims 1 to 3, wherein the antioxidant coating further comprises one or more of:
at least one of mono-aluminum phosphate, manganese phosphate, zinc phosphate, or potassium phosphate; or
at least one of boric acid or boric anhydride.

5. The article of any one of claims 1 to 4, wherein the substrate comprises a brake disc.

6. The article of any one of claims 1 to 5, wherein the antioxidant coating comprises a glass.

7. The article of any one of claims 1 to 6, wherein the substrate comprises a carbon composite.

8. The article of any one of claims 1 to 7, further comprising a barrier coating between the antioxidant coating and the substrate.

9. An antioxidant coating composition comprising:
an inorganic acid; and
a hydrophobic agent comprising lanthanum phosphate.

10. The antioxidant coating composition of claim 9, wherein the inorganic acid comprises phosphoric acid.

11. The antioxidant coating composition of any one of claims 9 or 10, further comprising one or more of:
a surfactant;
at least one of mono-aluminum phosphate, manganese phosphate, zinc phosphate, or potassium phosphate; or
at least one of boric acid or boric anhydride.

12. The antioxidant coating composition of any one of claims 9 to 11, comprising a colloidal suspension of the hydrophobic agent in an aqueous carrier.

13. A method comprising:
applying the antioxidant coating composition of any one of claims 9 to 12 to at least a portion of a substrate comprising carbon; and
allowing the antioxidant coating composition to dry or cure to form an antioxidant coating on at least the portion of the substrate.

14. The method of claim 13, wherein the applying comprises at least one of spraying, brushing, or coating the antioxidant coating composition on at least the portion of the substrate.

15. The method of any one of claims 13 or 14, further comprising heating the substrate with the antioxidant coating composition to form the antioxidant coating.
